# EUROPEAN PATENT SPECIFICATION

(11) **EP 2 379 415 B1**
(45) Date of publication and mention of the grant of the patent: **25.06.2014**
(21) Application number: 09838962.0
(22) Date of filing: 18.12.2009
(51) Int. Cl.: B65D 3/02, B31B 3/00, B31B 45/00

(54) **PACKAGE AND METHOD OF FORMING THE PACKAGE**
VERPACKUNG UND VERFAHREN ZUR HERSTELLUNG DER VERPACKUNG
EMBALLAGE ET PROCÉDÉ DE RÉALISATION DE L'EMBALLAGE

(30) Priority: 21.01.2009 SE 0900058
(43) Date of publication of application: 26.10.2011
(73) Proprietor: Tetra Laval Holdings & Finance S.A., 1009 Pully (CH)
(72) Inventor: ANDERSSON, Pär, S-22738 Lund (SE)
(74) Representative: Persson, Eva Kerstin Ch.
(86) International application number: PCT/SE2009/000528
(87) International publication number: WO 2010/085182

(56) References cited:
- WO-A1-03/086881
- WO-A1-2004/041663
- CA-A- 210 195
- GB-A- 412 789
- GB-A- 495 071
- GB-A- 495 071
- JP-U- S61 178 329
- US-A- 1 100 448
- US-A- 1 218 984
- US-A- 1 724 517
- US-A- 1 962 199
- US-A- 2 132 672
- US-A- 2 132 672
- US-A- 2 327 965
- US-A- 3 944 130
- US-A- 5 088 642

## Description

### Technical Field

The present invention concerns bottle-like packages of packaging material, such as, for example, paper-based packaging laminate, having a folded top. The invention also concerns a method of making said bottle-like packages.

### Prior Art

Brick-shaped packages of semi-rigid, folded, paper-based packaging laminate are in common use for beverages such as milk and juice. The traditional method of opening such packages has long been to tear or cut away a corner of a corner flap and thereby obtain a pouring spout. This type of package has, in recent years, also been provided with various types of opening arrangements which make for reclosure. These opening arrangements may, for example, be retrofitted glued-on lids which cover previously formed weakened lines in the packaging laminate. There may also be opening arrangements of plastic which are injection moulded direct in situ over a hole in the packaging laminate. One variation of these opening arrangements relates to an injection moulded, threaded neck which is provided so as to carry a screw cap.

Another trend which has recently come to notice is the wish to be able to drink juice or other beverages straight from bottle-shaped packages carrying a screw cap. These bottles may, for example, be of glass, metal or plastic. Above all, the market for plastic bottles is growing which probably can largely be referred to the low weight of such bottles in relation to the other materials.

There have also been a number of attempts to make packages of paper which satisfy the requirements on bottle-like configuration and a reclosable screw cap.

In WO 2004/041663 a previous bottle-like package is described. It has a cylindrical shape with a top formed into a tapered shoulder section. This package has flat foldings in the top, which folds are placed on the inside abutting the inside of the package. In US 3, 944, 130 a package according to the preamble of claim 1 is described. Although these packages work well in many cases there are some problems. By the folds pockets are formed on the inside, which pockets are troublesome to sterilize. Furthermore, the foldings are difficult to make in a filling machine.

### Summary of the Invention

In view of the above one object of the present invention is to form a bottle-like package avoiding the problems with sterilization. A further object is that the package should be relatively easy to produce.

According to the invention a package is formed having a body portion, a tapered upper shoulder portion, a bottom and an opening arrangement. The body portion and the tapered shoulder portion are formed in one piece. The opening arrangement is connected to the shoulder portion by means of a neck. The tapered shoulder portion has a number of radial pleats directed inwardly towards the centre of the package.

According to another aspect of the invention a method is described of forming a package. A packaging material is placed on a mandrel, having a top in the form of a truncated cone. Radial pleats are formed in a shoulder portion of the package placed on the mandrel by rulers being pressed into slots of the top of the mandrel. The rulers are placed on the outside of the package placed on the mandrel.

All free package edges of a package according to the invention are covered by plastic in that an opening device is applied by means of injection moulding directly on the carton by over-moulding.

Further objects and advantages of the method of the present invention will be obvious to a person skilled in the art reading the detailed description below of at present preferred embodiments.

### Brief Description of the Drawings

The invention will be described further below by way of example and with reference to the enclosed drawings. In the drawings:

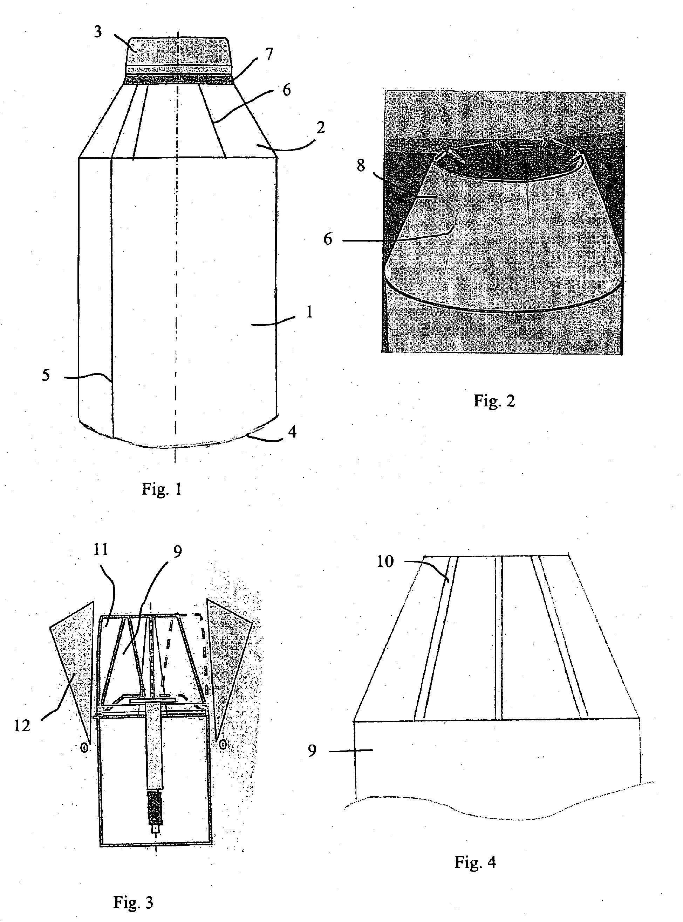

Fig. 1 is a side view of one example of a package according to the present invention,
Fig. 2 is a perspective view of a formed part of a package of the present invention,
Fig. 3 is a sketch of a folding mechanism used to form packages of the present invention,
Fig. 4 is a side view of a part of a mandrel of the folding mechanism of Fig. 3,
Fig. 5 is a sketch of the folding mechanism of Fig. 3 in another position,
Fig. 6 is a sectional sketch showing a mechanism for forming a neck on the packages, and
Fig. 7 is a side view of a package having a formed neck.

### Detailed description of Preferred Embodiments

According to the present invention a bottle-like package of packaging material has been developed. The package has a cylindrical body portion 1, an upper tapering shoulder portion 2, an opening arrangement 3 and a bottom 4. Even if the body portion is shown as cylindrical a person skilled in the art realises that in other embodiments the body portion has other forms. Thus, the body portion may have an oval form, may have two curved opposite sides and two flat opposite sides, may have a polygonal form etc. The opening arrangement 3, shown as a cap, is connected to the shoulder portion 2 by means of a neck 7. The package has a longitudinal joint 5, in which two opposing edges of the packaging material are fused together.

The shoulder portion 2, forming the top of the package, slops inwards and has a number of radial pleats 6. The radial pleats 6 are formed on the inside of the shoulder portion 2 and are directed inwardly towards the centre of the package. Between the radial pleats 6 flat parts 8 are formed. In other embodiments the parts between the radial pleats 8 are not flat but have a rounded form.

For forming the pleats 6 of the shoulder portion 2 a cylindrical package material is placed on a mandrel 9, having a top in the form of a truncated cone. In the top of the mandrel 9 a number of radial slots 10 are formed, which slots 10 go from top to bottom of the top of the mandrel 9. On the outside of the top of the mandrel a number of rulers 12 are received pivoted just below the top of the mandrel 9. Thus, the rulers 12 will have a rotational movement around their lower ends. In one embodiment the lower ends of the rulers 12 are received in a circumferential spring. The rulers 12 are placed opposite the slots 10 of the mandrel 9 and have a form allowing them to go into the slots 10. The rulers 12 are placed outside the package placed on the mandrel 9.

On the inside of the cylindrical package material, when placed on the mandrel 9, a number of plates 11 are positioned. The plates 11 are received pivoted at the bottom of the top of the mandrel 9. Thus, the plates 11 will have a rotational movement around their lower ends. In one embodiment also the lower ends of the plates 11 are received in a circumferential spring. The plates 11 each has a flat surface directed to the cylindrical package material. However, for packages not having parts with a rounded form between the pleats, each plate may have a correspondingly rounded form of the surface facing the package material.

In forming the pleats 6 of the shoulder portion 2 of the package the rulers 12 rotates inwardly, pressing the packaging material into the slots 10 of the mandrel 9. The package material placed between the slots 10 is pressed against the plates 11 on the inside of the cylindrical package material. During this forming also the plates 11 are rotated inwardly. After the forming the package material will have a sloping shoulder portion 2, having a number of radial pleats 6 and flat parts 8 between the radial pleats 6. As indicated above the parts between the radial pleats 6 have a rounded form in some embodiments. A person skilled in the art realises that the number of radial pleats 6 may vary. In one example there are eight radial pleats 6 but in other embodiments the number of pleats typically varies between three and twelve.

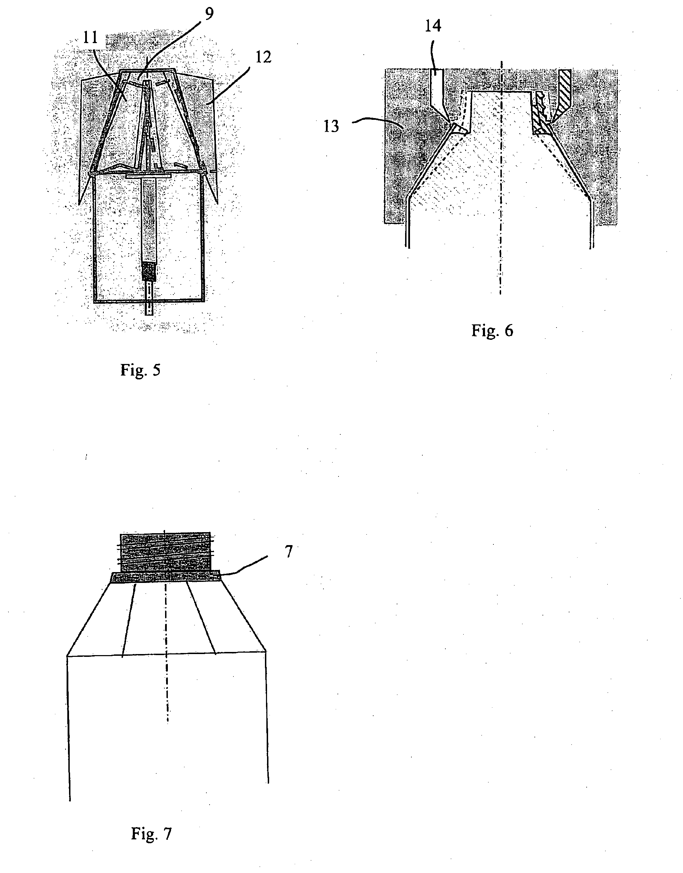

With the package material still on the mandrel 9, or possibly after movement to another mandrel, a neck 7 is injection moulded onto the top of the pleated shoulder portion 2 of the package material by over-moulding onto the package material. For the in-jection moulding a mould 13 is placed surrounding the top of the package material. In the left part of Fig. 6 the mould 13 and package are shown before moulding and in the right part of Fig. 6 these parts are shown after moulding. The mould 13 has a void 14 to receive the injected material. The mould 13 has an inner form giving a neck 7 having a thread for co-operation with a cap 3. In an alternative method a cap 3 is placed in the mould 13 before the injection moulding. In this case the void 14 of the mould 13 leads material in between the cap 3 and the package material. Thus, by this method the cap 3 and the package material are over-moulded simultaneously.

By the moulding step, irrespective of which method that is used, the edges of the package including the pleats are covered, obviating the sterilizing problems associated with previous solutions.

Further, in an embodiment not shown in the figures, the bottom 4 may have a number of corners such that the bottom can be folded based on a blank. For instance, the bottom may have eight corners.

In order to provide a package with less tension and to provide a robust folding process the radial pleats 6 may be arranged such that the placement of the pleats is in line with the placement of the corners of the bottom 4. In other words, distances from the transversal sealing along an intersection between the body portion 1 and the shoulder portion 2 to starting points for the radial pleats 6 may correspond to distances from the transversal sealing along an intersection between the body portion 1 and the bottom 4 to corners of the bottom 4. Further, the transversal sealing may be placed between two radial pleats and, correspondingly, between two corners of the bottom.

The body portion 1, the shoulder portion 2 and the bottom 4 may be formed by sealing together two sides of a blank such that a tube with a transversal sealing is obtained. The tube can in a next step be folded such that the shoulder portion 2 with radial pleats 6 is formed. Then the tube may be placed in a moulding module, comprising at least a first and a second mould, and the neck 7 can be moulded onto the shoulder portion such that a package with an open bottom portion is obtained. In a filling module, which may be included in the same apparatus as the moulding module, the package can be filled with a liquid food product. Finally, the bottom 4 may be formed by sealing together the bottom portion and folding it to a bottom with a number of corners, such as eight corners.

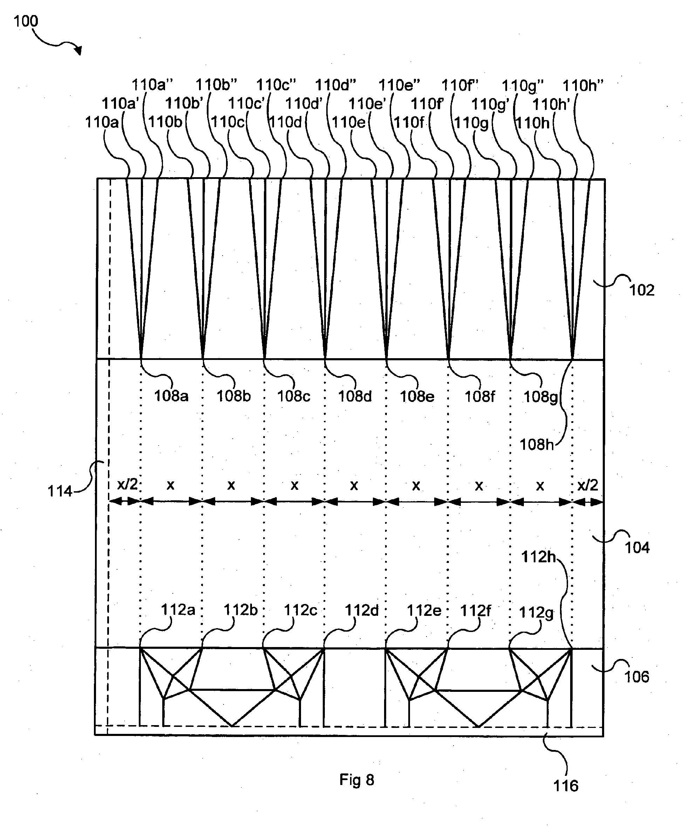

Referring to fig 8, the blank may be described as a blank 100 comprising a shoulder portion 102 provided with creasing lines (in the figure indicated by full lines) for a number of radial pleats, a body portion 104 and a bottom portion 106 provided with creasing lines for folding a bottom having a number of corners. The number of radial pleats may correspond to the number of corners of the bottom.

The creasing lines provided on the shoulder portion may extend from a number of radial pleat starting points 108a, 108b, 108c, 108d, 108e, 108f, 108g, 108h placed in the intersection between the shoulder portion 102 and the body portion 104 to a number of radial pleat end points 110a, 110a',110a", 110b, 110b', 100b", 110c, 110c', 110c", 110d, 110d', 110d", 110e, 110e', 110e", 110f, 110f, 110f', 110g, 110g', 110g", 110h, 110h', 110h". The number of radial end points can be three times the number of radial pleat starting points.

The creasing lines provided on the bottom portion 106 may be arranged such that a bottom with a number of bottom corner points 112a, 112b, 112c, 112d, 112e, 112f, 112g, 112h may be folded.

A distance x between two consecutive radial pleat starting points 108a, 108b, 108c, 108d, 108e, 108f, 108g, 108h may correspond to the distance x between two consecutive bottom corner points 112a, 112b, 112c, 112d, 112e, 112f, 112g, 112h.

Further, a longitudinal sealing section 114 may be provided next to the shoulder portion 102, the body portion 104 and the bottom portion 106, and a transversal sealing section 116 may be provided next to the bottom portion 106.

## Claims

1. A package having a body portion (1), an upper tapered shoulder portion (2), a bottom (4) and an opening arrangement (3), which body portion (1) and upper shoulder portion (2) are formed in one piece, which opening arrangement (3) is connected to the shoulder portion (2) by means of a neck (7), wherein the shoulder portion (2) has radial pleats (6) being directed inwardly towards the centre of the package,
**characterized in that**
the neck (7) is injection moulded onto the top of the pleated shoulder portion (2) of the package material by over-moulding onto the package material.

2. The package of claim 1, wherein the depth of the radial pleats (6) increases towards the upper end of the shoulder portion (2).

3. The package of any of the previous claims, wherein the shoulder portion (2) has flat parts (8) between the radial pleats (6).

4. The package of any of the previous claims, wherein the neck (7) is an injection moulded part.

5. The package of claim 4, wherein the injection moulded neck (7) covers the edges of the shoulder portion (2).

6. The package according to any of the preceding claims, wherein a number of radial pleats (6) corresponds to a number of corners of the bottom (4).

7. A method of forming a package according to any of the previous claims, **characterized in that** a packaging material is placed on a mandrel, having a top in the form of a truncated cone, whereby radial pleats being directed inwardly towards the centre of the package are formed in a shoulder portion of the package placed at the top of the mandrel by rulers being pressed into slots of the top of the mandrel, which rulers are placed on the outside of the package placed on the mandrel, wherein the method further comprises a step of injection moulding the neck (7) onto the top of the pleated shoulder portion (2) of the package material by over-moulding onto the package material.

8. The method of claim 7, wherein plates act on the inside of shoulder portion of the package between the rulers when the rulers are pressed into the slots.

9. The method of claim 8, wherein flat parts are formed between the radial slots by the cooperation of the rulers and plates.

10. The method of any of the claims 7-9, wherein an opening device is applied by means of over-moulding on the package material.

11. The method of any of the claims 7-9, wherein a cap and a shoulder portion of the package are over-moulded simultaneously.

12. The method of claim 7, wherein the plates are received pivoted at there lower ends at the transition to the top portion of the mandrel.

13. The method of claim 7, wherein the rulers are received pivoted at there lower ends below the transition to the top portion of the mandrel.

## Patentansprüche

1. Packung mit einem Körperabschnitt (1), einem oberen verjüngten Schulterabschnitt (2), einer Unterseite (4) und einer Öffnungsanordnung (3), wobei der Körperabschnitt (1) und der obere Schulterabschnitt (2) einstückig ausgebildet sind, wobei die Öffnungsanordnung (3) mit dem Schulterabschnitt (2) über einen Hals (7) verbunden ist, wobei der Schulterabschnitt (2) radiale Falten (6) aufweist, die nach innen zu der Mitte der Packung ausgerichtet sind, **dadurch gekennzeichnet, dass**
der Hals (7) auf die Oberseite des gefalteten Schulterabschnitts (2) des Packungsmaterials durch Übergießen des Verpackungsmaterials durch Spritzguss aufgeformt wird.

2. Packung nach Anspruch 1, wobei die Tiefe der radialen Falten (6) zu dem oberen Ende des Schulterabschnitts (2) zunimmt.

3. Packung nach einem der vorherigen Ansprüche, wobei der Schulterabschnitt (2) flache Teile (8) zwischen den radialen Falten (6) aufweist.

4. Packung nach einem der vorherigen Ansprüche, wobei der Hals (7) ein Spritzgussteil ist.

5. Packung nach Anspruch 4, wobei der gegossene Hals (7) die Ränder des Schulterabschnitts (2) abdeckt.

6. Packung nach einem der vorherigen Ansprüche, wobei eine Anzahl von radialen Falten (6) einer Anzahl von Ecken der Unterseite (4) entspricht.

7. Verfahren zum Herstellen einer Packung nach einem der vorherigen Ansprüche, **dadurch gekennzeichnet, dass** ein Packungsmaterial auf einem Dorn angeordnet ist, der eine Oberseite in Form eines stumpfen Kegels aufweist, wobei radiale Falten, die nach innen zu der Mitte der Packung ausgerichtet sind, in einem Schulterbereich der Packung an der Oberseite des Dorns von Reglern ausgebildet sind, die in Schlitze der Oberseite des Dorns gepresst werden, wobei die Regler auf der Außenseite der auf dem Dorn angeordneten Packung angeordnet sind, wobei das Verfahren ferner einen Schritt des Spritzgießens des Halses (7) auf die Oberseite des gefalteten Schulterabschnitts (2) des Packungsmaterials durch Überformen auf das Packungsmaterials umfasst.

8. Verfahren nach Anspruch 7, wobei die Scheiben auf der Innenseite des Schulterabschnitts der Verpackung zwischen den Reglern wirken, wenn die Regler in die Schlitze gepresst werden.

9. Verfahren nach Anspruch 8, wobei die flachen Teile zwischen den radialen Schlitzen durch Zusammenwirken von Reglern und Platten gebildet werden.

10. Verfahren nach einem der Ansprüche 7 bis 9, wobei eine Öffnungsvorrichtung durch Überformen auf das Packungsmaterial aufgebracht wird.

11. Verfahren nach einem der Ansprüche 7 bis 9, wobei eine Kappe und ein Schulterabschnitt der Packung gleichzeitig überformt werden.

12. Verfahren nach Anspruch 7, wobei die Platten an ihren unteren Enden gedreht an dem Übergang in dem oberen Abschnitt des Dorns aufgenommen werden.

13. Verfahren nach Anspruch 7, wobei die Regler an ihren unteren Enden gedreht unter dem Übergang in dem oberen Abschnitt des Dorns aufgenommen werden.

## Revendications

1. Emballage ayant une partie de corps (1), une partie d'épaulement (2) effilée vers le haut, un fond (4) et un agencement d'ouverture (3), lesquelles parties de corps (1) et d'épaulement (2) étant formées d'une seule pièce, lequel agencement d'ouverture (3) étant connecté à la partie d'épaulement (2) au moyen d'un col (7), la partie d'épaulement (2) présentant des plis radiaux (6) orientés vers l'intérieur vers le centre de l'emballage,
**caractérisé en ce que**
le col (7) est moulé par injection sur le dessus de la partie d'épaulement plissée (2) du matériau d'emballage par surmoulage sur le matériau d'emballage.

2. Emballage selon la revendication 1, dans lequel la profondeur des plis radiaux (6) augmente vers l'extrémité supérieure de la partie d'épaulement (2).

3. Emballage selon l'une quelconque des revendications précédentes, dans lequel la partie d'épaulement (2) présente des parties plates (8) entre les plis radiaux (6).

4. Emballage selon l'une quelconque des revendications précédentes, dans lequel le col (7) est une pièce moulée par injection.

5. Emballage selon la revendication 4, dans lequel le col moulé par injection (7) couvre les bords de la portion d'épaulement (2).

6. Emballage selon l'une quelconque des revendications précédentes, dans lequel un certain nombre de plis radiaux (6) correspond à un certain nombre de coins du fond (4).

7. Procédé de formation d'un emballage selon l'une quelconque des revendications précédentes, **caractérisé en ce qu'**un matériau d'emballage est placé sur un mandrin, sa partie supérieure ayant la forme d'un cône tronqué, des plis radiaux orientés vers l'intérieur vers le centre de l'emballage étant formés dans une partie d'épaulement de l'emballage placée sur la partie supérieure du mandrin par des règles placées dans des fentes de la partie supérieure du mandrin, lesquelles règles sont placées sur l'extérieur de l'emballage placé sur le mandrin, le procédé comprenant en outre une étape de moulage par injection du col (7) sur le dessus de la partie d'épaulement plissée (2) du matériau d'emballage par surmoulage sur le matériau d'emballage.

8. Procédé selon la revendication 7, dans lequel les plaques agissent sur l'intérieur de la partie d'épaulement de l'emballage entre les règles lorsque les règles sont pressées dans les fentes.

9. Procédé selon la revendication 8, dans lequel des parties plates sont formées entre les fentes radiales par coopération des règles avec les plaques.

10. Procédé selon l'une quelconque des revendications 7 à 9, dans lequel un dispositif d'ouverture est appliqué au moyen d'un surmoulage sur le matériau d'emballage.

11. Procédé selon l'une quelconque des revendications 7 à 9, dans lequel un capuchon et une partie d'épaulement de l'emballage sont surmoulés simultanément.

12. Procédé selon la revendication 7, dans lequel les plaques sont reçues et pivotées au niveau de leurs extrémités inférieures au niveau de la transition à la partie supérieure du mandrin.

13. Procédé selon la revendication 7, dans lequel les règles sont reçues et pivotées au niveau de leurs extrémités inférieures en dessous de la transition à la partie supérieure du mandrin.
